# EUROPÄISCHE PATENTSCHRIFT

(11) **EP 1 003 020 B1**
(45) Veröffentlichungstag und Bekanntmachung des Hinweises auf die Patenterteilung: **26.04.2006**
(21) Anmeldenummer: 99811038.1
(22) Anmeldetag: 11.11.1999
(51) Int. Cl.: G01G 15/00, G01N 35/00

(54) **Verfahren zum Wägen von Proberöhren sowie Arbeitsstation**
Method for weighing sample tubes as well as work station
Procédé de pesage de tubes d'essai ainsi que poste de travail

(30) Priorität: 17.11.1998 CH 229798
(43) Veröffentlichungstag der Anmeldung: 24.05.2000
(73) Patentinhaber: Tecan Trading AG, 8708 Männedorf (CH)
(72) Erfinder: Schinzel, Fred, 8708 Männedorf (CH); Jokes, Ivan, 8630 Rüti (CH); Rüdisser, Martin, 8645 Jona SG (CH)
(74) Vertreter: OK pat AG

(56) Entgegenhaltungen:
- WO-A-98/01760
- GB-A- 997 226
- US-A- 3 489 521
- US-A- 5 769 775

## Beschreibung

### Technisches Gebiet

Die Erfindung betrifft ein Verfahren zum Wägen von Proberöhren, die in einem Proberöhrenbehälter angeliefert werden, wie es vor allem zur Vorbereitung der Zentrifugierung von Proben in chemischen, biologischen und medizinischen Labors Verwendung findet sowie eine Arbeitsstation, wie sie im Zusammenhang mit solchen und ähnlichen Verfahren eingesetzt werden.

### Stand der Technik

Im Laborbetrieb tritt öfters der Fall ein, dass die Gewichte von Proberöhren, die gewöhnlich zu mehreren in einem Proberöhrenbehälter angeliefert werden, einzeln bestimmt werden müssen. Wenn etwa die Flüssigkeitsproben zentrifugiert werden sollen, müssen die Proberöhren auf mehrere, gewöhnlich vier Proberöhrenkörbe verteilt werden, die dann in die Zentrifuge eingeführt werden. Dabei dürfen zur Beschränkung der Unwucht die Gewichte einander gegenüberliegender Proberöhrenkörbe um nicht mehr als einen Maximalwert von gewöhnlich zwischen 15g und 20g voneinander abweichen.

Aus WO-A-98/01 760 sind ein gattungsgemässes Verfahren sowie eine gattungsgemässe Arbeitsstation zu seiner Durchführung bekannt. Gemäss dieser Schrift werden die Gewichte von Proberöhren bestimmt, indem dieselben nacheinander einem Proberöhrenbehälter entnommen und mittels einer Uebergabeeinrichtung in einem Proberöhrenkorb abgelegt werden, welcher auf einer Waage angeordnet ist. Aus dem durch das Ablegen einer Proberöhre verursachten Gewichtszuwachs des Proberöhrenkorbs wird jeweils das Gewicht der Proberöhre ermittelt. Die Proberöhren werden so auf Proberöhrenkörbe verteilt, dass dieselben Paare bilden, derart, dass sich die Gesamtgewichte der einem Paar zugehörenden Proberöhrenkörbe um höchstens 10g unterscheiden. Bei diesem Verfahren erfolgt die Bestimmung des Gewichtes erst nach dem Ablegen der Proberöhre, so dass das ermittelte Gewicht nicht dazu herangezogen werden kann, das Ablegen der Proberöhren selbst, insbesondere deren Verteilung auf die Proberöhrenkörbe, nach Massgabe der ermittelten Gewichte zu steuern und Fehlverteilungen von vornherein zu vermeiden. Fehler müssen nachträglich durch Umverteilung von Proberöhren oder durch den Einsatz von Ausgleichsgewichten korrigiert werden, was erhebliche Zeitverluste verursachen kann.

Aus der GB-A-997 226 ist eine Transportbahn mit Förderbändern bekannt, mit einer Waage, welche eine anhebbare Plattform aufweist, mittels welcher Artikel von der Transportbahn abgehoben und ihr Gewicht bestimmt werden kann, worauf sie durch Absenken der Plattform wiederum auf die Transportbahn abgesetzt und weitertransportiert werden. Die Einrichtung ist nicht zur Entnahme von Teilen von Artikeln und Bestimmung der Gewichte dieser Teile geeignet.

US-A-3 489 521 zeigt eine Arbeitsstation mit einer Zuführeinrichtung für Proberöhrenbehälter mit einer Zuführbahn und einer zu derselben parallelen Rückführbahn, beide mit Förderbändern, sowie mit einer querverlaufenden Zwischenbahn, welche die Zuführbahn mit der Rückführbahn verbindet. Sie weist auch eine Zentrifuge auf, in welcher die Proberöhren ohne vorherige Wägung in den Proberöhrenbehältern zentrifugiert werden.

### Darstellung der Erfindung

Der Erfindung liegt die Aufgabe zugrunde, die Wägung der Proberöhren gegenüber dem bekannten gattungsgemässen Verfahren zu vereinfachen und zu beschleunigen. Diese Aufgabe wird durch die Merkmale im Kennzeichen des Anspruchs 1 gelöst. Beim erfindungsgemässen Verfahren ist eine Zwischenablage der Proberöhre, deren Gewicht bestimmt werden soll, unnötig. Sie kann dem Proberöhrenbehälter entnommen und unmittelbar z. B. zu einem Proberöhrenkorb gebracht und dort abgelegt werden. Die Ermittlung des Gewichtes verursacht dabei keine Verzögerung.

Im weiteren soll die gattungsgemässe Arbeitsstation derart angepasst werden, dass sie für die Durchführung des erfindungsgemässen Verfahrens geeignet ist und insbesondere das Zuführen und Wägen von Proberöhren wesentlich erleichtert. Diese Aufgabe wird durch die Merkmale im Kennzeichen des Anspruchs 4 gelöst. Die erfindungsgemässe Arbeitsstation erlaubt eine einfache Zuführung der Proberöhrenbehälter zur Waage und eine bequeme Entnahme einzelner Proberöhren aus denselben.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine schematische Uebersicht über eine erfindungsgemässe Arbeitsstation und den Ablauf des erfindungsgemässen Verfahrens,
- Fig. 2: eine Draufsicht auf einen Teil einer erfindungsgemässen Zuführeinrichtung,
- Fig. 3: einen vertikalen Längsschnitt durch den in Fig. 2 dargestellten Teil der erfindungsgemässen Zuführeinrichtung,
- Fig. 4: eine perspektivische Darstellung von Teilen der erfindungsgemässen Uebergabeeinrichtung,
- Fig. 5: eine Draufsicht auf einen der in Fig. 4 dargestellten Teile der erfindungsgemässen Uebergabeeinrichtung,
- Fig. 6: eine perspektivische Darstellung von Teilen der erfindungsgemässen Uebergabeeinrichtung und
- Fig. 7: einen vertikalen Längsschnitt durch die in Fig. 6 dargestellten Teile der erfindungsgemässen Uebergabeeinrichtung.

### Wege zur Ausführung der Erfindung

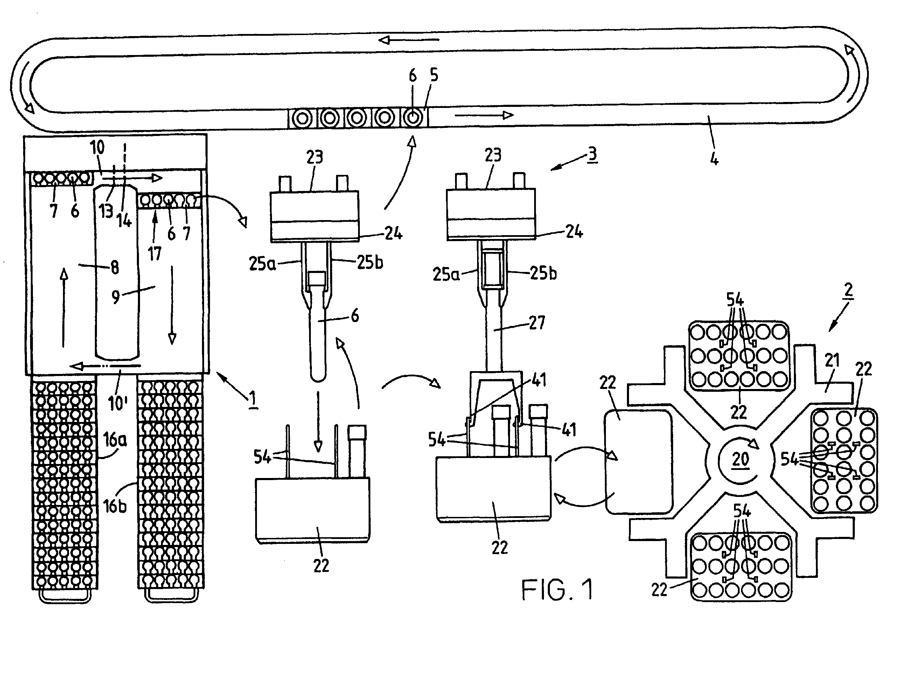

Fig. 1 zeigt eine Arbeitsstation mit einer Zuführeinrichtung 1, einer Zentrifuge 2 und einer Uebergabeeinrichtung 3. Ausserdem ist eine Fördereinrichtung 4 vorhanden, die einzelne in Träger 5 eingesteckte Proberöhren 6 zu anderen Bearbeitungsmodulen (nicht dargestellt) bringt.

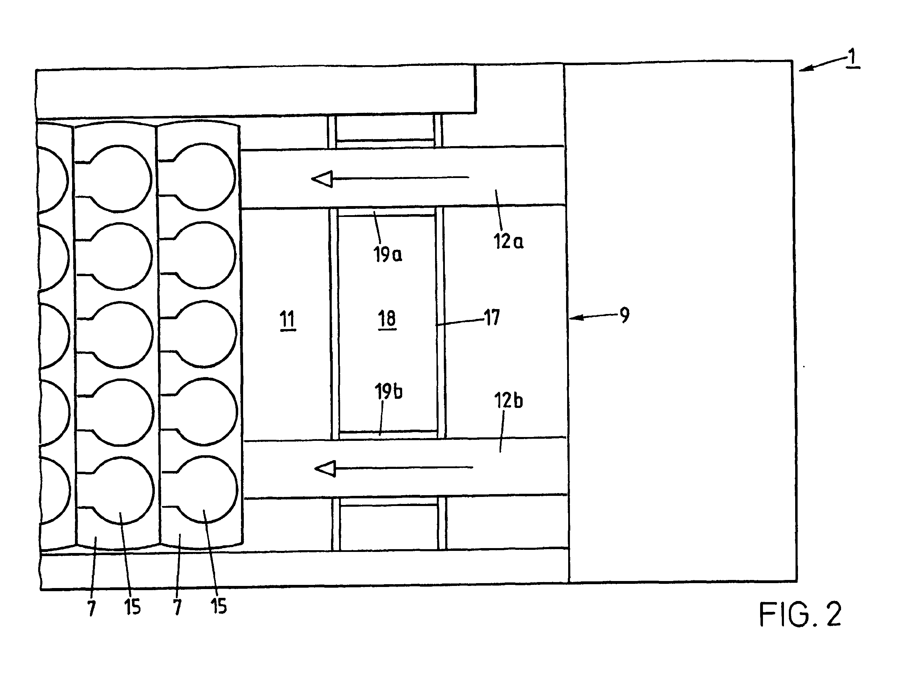

Die Zuführeinrichtung 1 dient zur Zuführung von Proberöhren 6, die, gewöhnlich zu mehreren, u. U. aber auch einzeln, in Proberöhrenbehältern 7 angeliefert werden, zur Arbeitsstation und zugleich zur Ueberprüfung und Klassifizierung derselben. Sie umfasst eine Zuführbahn 8 und eine mit Abstand neben derselben angeordnete, zu ihr parallele Rückführbahn 9. Das Ende der Zuführbahn 8 ist mit dem Anfang der Rückführbahn 9 durch eine querverlaufende Zwischenbahn 10 verbunden. Wie in Fig. 2 am Beispiel der Rückführbahn 9 dargestellt, weisen dieselbe und die Zuführbahn 8 jeweils zwei mit Abstand nebeneinander angeordnete, über eine Grundplatte 11 laufende Förderbänder 12a,b auf. Die Zwischenbahn 10 weist dagegen ein seitliches Förderband auf, das mit Nocken in seitliche Ausnehmungen an den Proberöhrenbehältern 7 eingreift. Auf der gegenüberliegenden Seite sind an der Zwischenbahn 10 ein Höhenabtaster 13 mit zwei auf unterschiedlichen Höhen angeordneten optisch-reflexiv arbeitenden Zellen und ein Balkencodeleser 14 nebeneinander angeordnet. Es kann ausserdem eine zweite querverlaufende Zwischenbahn 10' vorgesehen sein, die das Ende der Rückführbahn 9 mit dem Anfang der Zuführbahn 8 verbindet.

Die gleich ausgebildeten Proberöhrenbehälter 7 weisen jeweils mehrere - im dargestellten Fall fünf - in Längsrichtung hintereinander angeordnete Ausnehmungen 15 (Fig. 2) mit seitlich durchgehenden senkrechten Schlitzen auf, welche zur Aufnahme von Proberöhren 6 dienen. Sie werden in einer Lade 16a angeliefert, welche eine Reihe von Proberöhrenbehältern 7 enthält, die quer ausgerichtet hintereinander angeordnet sind. Die Lade 16a kann am Eingang der Zuführbahn 8 an die Zuführeinrichtung 1 angekoppelt werden. Eine weitere Lade 16b ist am Ausgang der Rückführbahn 9 ebenfalls ankoppelbar. Während die erste Lade 16a waagrecht ausgerichtet ist, fällt die zweite Lade 16b nach aussen mit einem Winkel von ca. 15° zur Waagrechten ab.

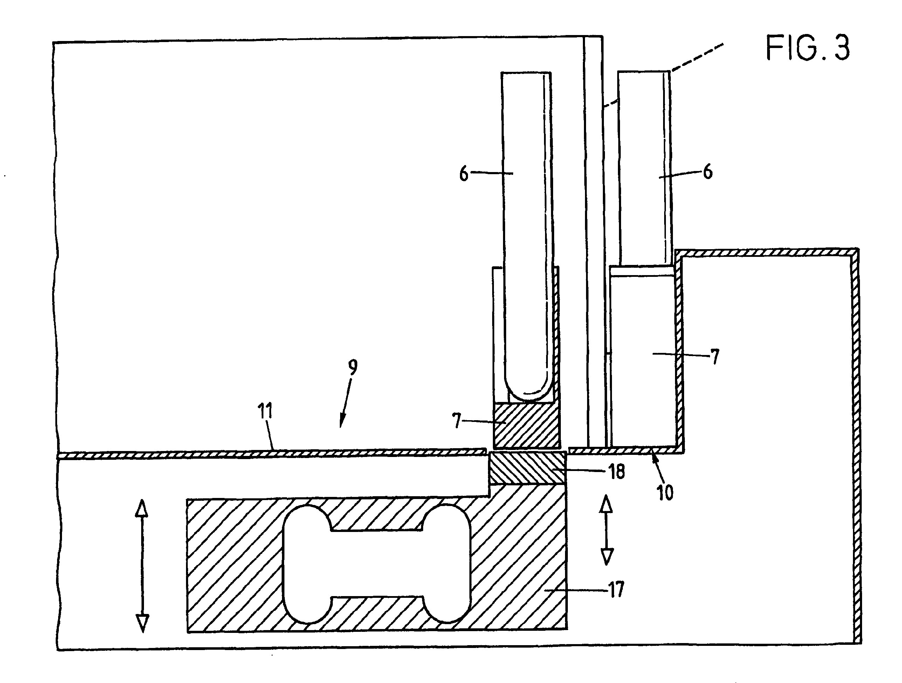

Eingangs der Rückführbahn 9 ist unterhalb der Grundplatte 11 eine Waage 17, die mit einem Parallelogrammträger mit Dehnungsmessstreifen aufgebaut ist, angeordnet mit einer Plattform 18 (Fig. 2, 3), welche eine sich über die ganze Breite der Rückführbahn 9 erstreckende Oeffnung in der Grundplatte 11 im wesentlichen ausfüllt. Die Plattform 18 weist an ihrer Oberseite zwei in Längsrichtung der Rückführbahn 9 durchgehende Ausnehmungen 19a,b auf. Die Waage 17 kann aus einer inaktiven Position, in der die Oberseite der Plattform 18 unterhalb der Förderbänder 12a,b liegt, in eine aktive Position angehoben werden, in welcher ihre Oberseite - mit Ausnahme der Ausnehmungen 19a,b, welche dann die Förderbänder 12a,b aufnehmen - höher liegt als diese, so dass die Plattform 18 einen Proberöhrenbehälter 7, der bei inaktiver Position der Waage 17 auf den Förderbändern 12a,b aufliegt, beim Anheben der Waage 17 von denselben abhebt, worauf sein Gewicht ermittelt werden kann.

Die Zentrifuge 2 weist ein um eine mittige Drehachse 20 drehbares Kreuz 21 auf, zwischen dessen Armen vier Proberöhrenkörbe 22 aufgehängt werden können, die ganz oder teilweise mit Proberöhren aufgefüllt sind. Die Proberöhren sind in Ausnehmungen, die in mehreren parallelen Reihen im jeweiligen Proberöhrenkorb angeordnet sind, eingesteckt. Die Proberöhrenkörbe 22 bilden zwei Paare, wobei die zu einem Paar gehörigen einander jeweils bezüglich der Drehachse 20 diametral gegenüberliegen. Die Gewichte der Proberöhrenkörbe 22 eines Paares dürfen zur Begrenzung der Unwucht höchstens um einen bestimmten Maximalwert, der gewöhnlich zwischen 15g und 20g liegt, voneinander abweichen.

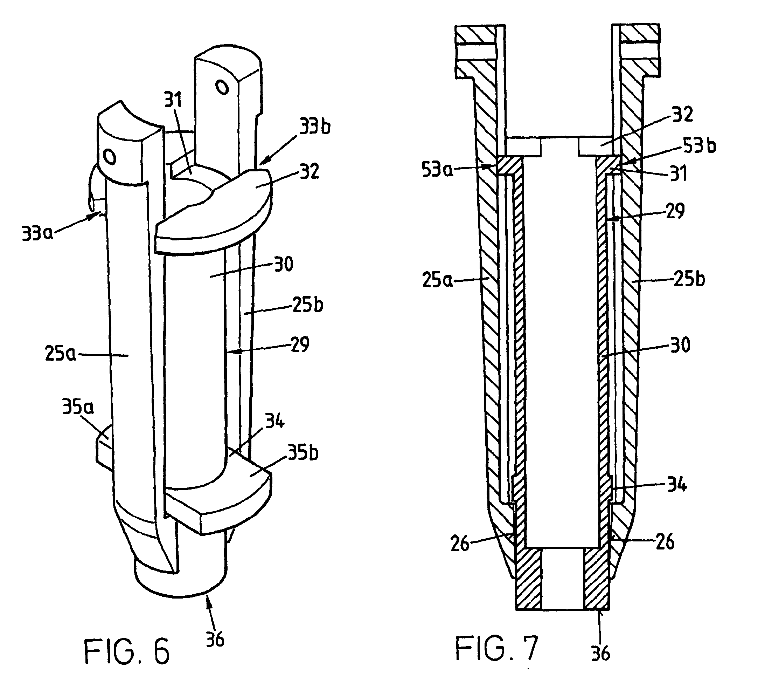

Die Uebergabeeinrichtung 3 umfasst einen Greifer 23 (in Fig. 1 in zwei verschiedenen Positionen dargestellt), welcher so aufgehängt ist, dass er in drei Richtungen, insbesondere in zwei zueinander normalen waagrechten Richtungen und senkrecht gesteuert verfahren werden kann. Er weist eine nach unten ragende Greiferzange 24 auf, welche um eine senkrechte Achse gesteuert drehbar ist und zwei einander gegenüberliegende Greiferfinger 25a,b umfasst, die zum Oeffnen und Schliessen der Greiferzange 24 voneinander weg bzw. aufeinander zu bewegt werden können. Die Greiferfinger 25a,b weisen an ihren Endbereichen einander zugekehrte gekehlte Kontaktflächen 26 (Fig. 7) auf, die zur Verbesserung der Haftung mit einem rutschfesten, elastischen Belag z. B. aus Polyurethan überzogen sind. Die Greiferzange 24 eignet sich damit unmittelbar zum Erfassen und Halten von Proberöhren 6 und Gegenständen ähnlicher Form.

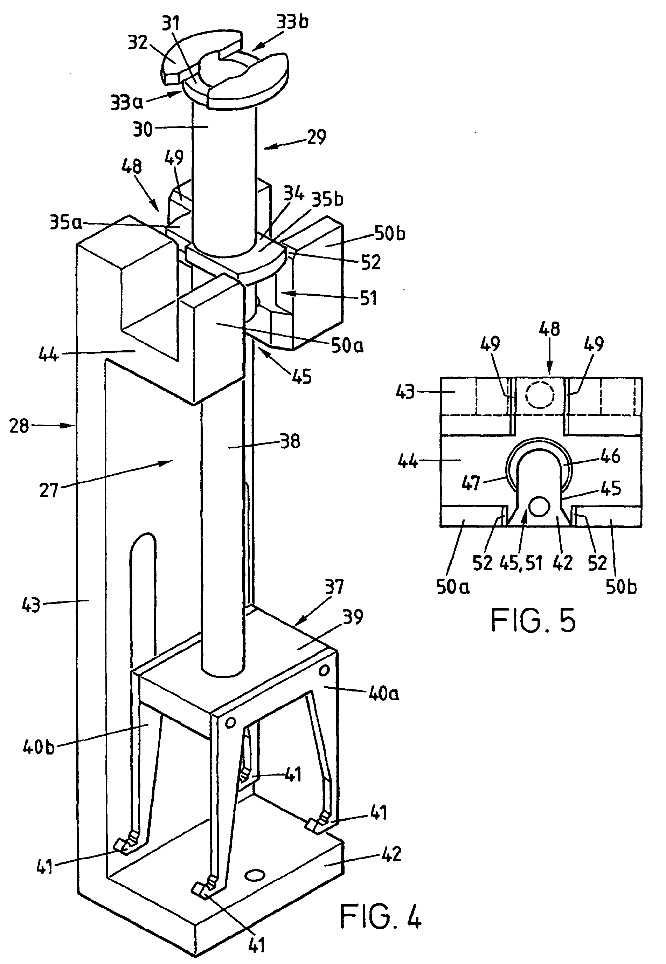

Damit auch andere Gegenstände wie z. B. Proberöhrenkörbe 22 vom Greifer 23 erfasst werden können, ist im Zugriffsbereich desselben eine Aufnahmevorrichtung 27 (Fig. 4) in einer Halterung 28 abgelegt. Die Aufnahmevorrichtung 27 weist ein oberes Handhabungsteil 29 auf, welches einen zylindrischen, also bezüglich seiner Form im wesentlichen einer Proberöhre entsprechenden Grundkörper 30 umfasst, der an seinem oberen Ende einen umlaufenden ersten Kragen 31 trägt. Unmittelbar darüber ist ein grösserer zweiter Kragen 32 angebracht, welcher zwei einander gegenüberliegende Ausnehmungen 33a,b aufweist. In der Nähe seines unteren Endes trägt der Grundkörper 30 einen länglichen dritten Kragen 34, der zwei einander gegenüberliegende längere Fortsätze 35a,b bildet, aber unterhalb der Ausnehmungen 33a,b nur schmal ist. Das untere Ende des Grundkörpers 30 bildet eine nach unten weisende kreisringförmige Anschlagfläche 36 (Fig. 6, 7).

An den Grundkörper 30 des Handhabungsteils 27 schliesst unten ein mit ihm verbundenes, z. B. verschraubtes Zwischenteil 37 an mit einem zylindrischen Stiel 38 und einer an dessen unterem Ende befestigten Trägerplatte 39, an deren Längsseiten zwei U-Teile 40a,b angeschraubt sind, deren jedes zwei nach unten ragende Haken 41 bildet, derart, dass die Positionen der vier gleichgerichteten Haken 41 die Eckpunkte eines waagrechten Rechtecks bilden.

Die Halterung 28 weist eine Bodenplatte 42 auf, an welcher eine senkrechte Rückwand 43 befestigt ist, die etwas unterhalb ihres oberen Endes eine oberhalb der Bodenplatte 42 liegende waagrechte Halteplatte 44 trägt. Diese weist an ihrem von der Rückwand 43 abgewandten Rand einen Schlitz 45 auf, welcher halbkreisförmig abschliesst und an der Oberseite der Halteplatte 44 von einem Auflagestreifen 46 umgeben ist, der einen Teilkreisring bildet. Er ist gegenüber dem umgebenden Teil der Oberseite der Halteplatte 44 tiefergelegt und mit ihm über einen trichterförmig nach innen geneigten Zentrierstreifen 47 verbunden. Die Rückwand 43 ist mit einem oben offenen senkrechten Schlitz 48 versehen, der bis zur Halteplatte 44 durchgeht und an seinen oberen Rändern nach innen abfallende Abschrägungen 49 aufweist. Am vorderen Rand trägt die Halteplatte 44 zwei nach oben weisende, bündig mit der Rückwand 43 abschliessende Frontplatten 50a,b, die einen etwas breiteren oben offenen senkrechten Schlitz 51 seitlich begrenzen, der gleichfalls an seinen oberen Rändern nach innen abfallende Abschrägungen 52 aufweist.

Bei in der Halterung 28 abgelegter Aufnahmevorrichtung 27 nimmt der Schlitz 45 den Stiel 38 des Zwischenteils 37 auf, während die Anschlagfläche 36 am unteren Ende des Handhabungsteils 29, vom Zentrierstreifen 47 knapp umgeben, auf dem Auflagestreifen 46 aufliegt. Die Fortsätze 35a,b ragen dabei mit knappem seitlichen Spiel in die Schlitze 48 bzw. 51. Die räumliche Lage der Aufnahmevorrichtung 27 ist somit einschliesslich ihrer Drehlage genau definiert.

Wird das Handhabungsteil 29 von der Greiferzange 24 gehalten, so liegen (Fig. 6, 7) die gekehlten Kontaktflächen 26 der Greiferfinger 25a,b etwas unterhalb des dritten Kragens 34 an Abschnitten der Aussenseite des zylindrischen Grundkörpers 30 an, die etwa entsprechend gebauchte Gegenkontaktflächen bilden. Die Kontaktflächen 26 sind etwas nach innen versetzt. Die Einsprünge liegen knapp unterhalb des Kragens 34 und bilden eine Sicherung gegen Herausgleiten des Handhabungsteils 29 nach unten. Die Greiferfinger 25a,b liegen in den Ausnehmungen 33a,b im zweiten Kragen 32 und bilden mit denselben eine Sicherung gegen Verdrehung des Handhabungsteils 29 um eine senkrechte Achse wie auch gegen Querverschiebung. Zugleich liegen die Greiferfinger 25a,b mit Kontaktbereichen 53a,b am Aussenrand des ersten Kragens 31 an. Dabei sind die unterhalb der Kontaktstelle liegenden Abschnitte der Greiferfinger 25a,b leicht elastisch nach aussen gebogen, so dass die Kontaktflächen 26 mit einem gewissen Anpressdruck an den Gegenkontaktflächen anliegen und den Grundkörper 30 dort unverrückbar fixieren. Durch die Kontaktierung des Handhabungsteils 29 an zwei vertikal beabstandeten Bereichen ist dasselbe auch gegen Drehungen um horizontale Achsen zuverlässig gesichert. Die Aufnahmevorrichtung 27 kann also vom Greifer 23 stets in definierter Lage gehalten und sicher geführt werden.

Damit (Fig. 1) die Proberöhrenkörbe 22 an die Aufnahmevorrichtung 27 angekoppelt werden können, sind sie mit vier nach oben weisenden Laschen 54 versehen, welche an ihren oberen Enden Oesen bilden, deren relative Lage derjenigen der Haken 41 entspricht. Die Haken 41 können also zum Ankoppeln des Proberöhrenkorbes 22 zugleich in die vier Oesen eingeführt werden, worauf der Proberöhrenkorb 22 angehoben und verschoben werden kann. Nach Absetzen desselben am gewünschten Platz können die Haken 41 aus den Oesen wieder herausgezogen werden.

Soll nun eine Anzahl von Proben in der Anlage nach Fig. 1 bearbeitet, insbesondere mindestens ein Teil von ihnen zentrifugiert werden, so wird eine Lade mit Proberöhrenbehältern 7, welche jeweils ganz oder teilweise mit Proberöhren 6 gefüllt sind, angeliefert und als Lade 16a an den Eingang der Zuführbahn 8 angekoppelt. Die Proberöhren 6 enthalten jeweils zu behandelnde Proben und sind mit Balkencode-Etiketten versehen, welche dieselben kennzeichnen. Dann werden die Proberöhrenbehälter 7 manuell auf die Zuführbahn 8 geschoben, dort von den Förderbändern erfasst und quer zu ihrer Längsrichtung weitertransportiert, bis die Zuführbahn 8 aufgefüllt ist. Dann wird ein Proberöhrenbehälter 7 nach dem anderen quer zur bisherigen Transportrichtung in Längsrichtung über die Zwischenbahn 10 geschoben, wobei die Proberöhren 6 eine nach der anderen vom Höhenabtaster 13 jeweils bezüglich ihrer Höhe einer von drei verschiedenen Klassen zugeteilt werden. Unmittelbar anschliessend werden die Etiketten der Proberöhren 6 vom Balkencodeleser 14 gelesen und die Proben im Hinblick auf ihre nachfolgende Bearbeitung weiter klassifiziert, u. a. kann auf Grund des Balkencodes festgestellt werden, ob eine Probe zentrifugiert werden soll oder nicht.

Wenn der Proberöhrenbehälter 7 den Anfang der Rückführbahn 9 erreicht, kommt er in den Wirkungsbereich der Förderbänder 12a,b (Fig. 2) derselben, die ihn, nun entgegen der Transportrichtung der Zuführbahn 8 und wieder quer zu seiner Längsrichtung, weitertransportieren, bis er sich über der Waage 17 befindet, die daraufhin aktiviert wird. Sie wird angehoben, bis die Plattform 18 den Proberöhrenbehälter 7 leicht von den Förderbändern 12a,b abhebt. Dann wird das Gesamtgewicht des Proberöhrenbehälters 7 ermittelt. Anschliessend wird mittels des Greifers 23 eine erste Proberöhre 6 erfasst, angehoben und aus dem Proberöhrenbehälter 7 entfernt. Anschliessend wird wiederum das Gewicht des Proberöhrenbehälters 7 ermittelt.

Falls das Gewicht der entfernten Proberöhre 6 benötigt wird, was insbesondere dann der Fall ist, wenn die in ihr befindliche Probe zentrifugiert werden soll, so wird es als Differenz der vor und nach ihrer Entfernung aus dem Proberöhrenbehälter 7 ermittelten Gewichte desselben bestimmt. Die Proberöhre 6 kann dann nach dem Resultat der Gewichtsbestimmung in einem von vier Proberöhrenkörben 22, die sich im Zugriffsbereich des Greifers 23 befinden, abgelegt werden. Dabei wird in bereits erläuterter Weise eine Gewichtsverteilung angestrebt, bei der die für die Zentrifuge 2 maximal zulässigen Unwuchten nicht überschritten werden. Neben dem Gewicht der entnommenen Proberöhre 6 können natürlich auch noch andere Parameter für die Zuteilung berücksichtigt werden, z. B. gegebenenfalls das Gesamtgewicht der im Proberöhrenbehälter 7 verbliebenen Proberöhren 6, das aus der letzten Wägung und dem bekannten Leergewicht desselben bestimmt werden kann oder die ermittelten Höhen der Proberöhren 6. Wenn die Probe nicht zentrifugiert werden soll, kann die Proberöhre 6 mit oder ohne Bestimmung ihres Gewichtes unmittelbar auf einem der Träger 5 der Fördereinrichtung 4 abgesetzt werden.

Bei der Entnahme der weiteren Proberöhren 6 wird genau gleich wie oben beschrieben vorgegangen. Nach jeder Entnahme wird das Gesamtgewicht des Proberöhrenbehälters 7 ermittelt und aus der Differenz zum Resultat der voraufgehenden Wägung das Gewicht der eben entnommenen Proberöhre bestimmt. Sind alle Proberöhren, die entnommen werden sollten, entnommen - gewöhnlich sind das alle, es kann aber vorkommen, dass einzelne Proberöhren nicht entnommen werden sollen, z. B. wenn der Balkencode nicht lesbar war - so wird die Waage 17 wieder in ihre inaktive Position abgesenkt und der Proberöhrenbehälter 7 weitertransportiert, wobei gewöhnlich zugleich der nächste in den Bereich der Waage 17 geschoben wird. Spätestens wenn die Rückführbahn 9 vollständig mit - normalerweise leeren - Proberöhrenbehältern 7 gefüllt ist, wird an den Ausgang derselben die Lade 16b angekoppelt, was sowohl ein Versenken eines Anschlags am Ende der Rückführbahn 9 auslöst, der bisher verhindert hat, dass Proberöhrenbehälter über deren Ende hinausgeschoben wurden als auch ein Anlaufen der Förderbänder 12a,b, die sämtliche Proberöhrenbehälter 7 von der Rückführbahn 9 auf die Lade 16b schieben, wo sie wegen der Neigung derselben nach aussen rutschen, bis sie anstehen. Wenn sie voll ist, wird die Lade 16b abgekoppelt und entfernt. Die Zuführeinrichtung 1 kann gegebenenfalls auch so betrieben werden, dass die Proberöhrenbehälter vom Ende der Rückführbahn 9 über die zweite Zwischenbahn 10' zurück an den Anfang der Zuführbahn 8 verschoben werden und somit in einem geschlossenen Kreis umlaufen. In diesem Fall werden sie manuell mit Proberöhren bestückt.

Sind die Proberöhrenkörbe 22 aufgefüllt, so müssen sie in die Zentrifuge 2 eingeführt werden. Zu diesem Zweck fährt der Greifer 23 die Halterung 28 (Fig. 4) an, wo die Greiferzange 24 das Handhabungsteil 29 fasst, anhebt und die Aufnahmevorrichtung 27 nach vorn herauszieht. Anschliessend wird ein erster Proberöhrenkorb 22 in der Zentrifuge 2 gefasst, indem die Aufnahmevorrichtung 27 mittels des Greifers 23 so positioniert wird, dass die Haken 41 vor den Oesen in den Laschen 54 liegen, worauf die Haken 41 durch eine waagrechte Verschiebung in die Oesen eingeführt werden. Anschliessend wird der Greifer 23 angehoben, so dass die Haken 41 mit den Oesen sicher eingreifen. Der so angekoppelte Proberöhrenkorb 22 kann jetzt aus der Zentrifuge 2 herausgehoben und zu einem geeigneten Platz verschoben werden. Anschliessend wird die Verbindung zwischen der Aufnahmevorrichtung 27 und dem Proberöhrenkorb 22 durch eine zur oben beschriebenen umgekehrte Bewegungsfolge wieder gelöst. In entsprechender Weise wird dann einer der neu aufgefüllten Proberöhrenkörbe 22 zur Zentrifuge 2 verschoben und in dieselbe eingeführt. So werden schliesslich alle vier Proberöhrenkörbe 22 in der Zentrifuge 2 ausgetauscht, wobei die Drehachse 20 jeweils vor dem Austausch eines weiteren Proberöhrenkorbs 22 eine Vierteldrehung ausführt, so dass das Herausnehmen und Einführen der Proberöhrenkörbe in die Zentrifuge 2 immer an der gleichen Stelle erfolgt.

Anschliessend fährt der Greifer 23 wiederum die Halterung 28 an und legt die Aufnahmevorrichtung 27 dort ab. Der Zentrierstreifen 47 und die Abschrägungen 49 und 52 sorgen dabei dafür, dass die Aufnahmevorrichtung 27 auch bei nicht völlig präziser Ablage genau ihre definierte Lage annimmt, an der sie sicher und ohne Schwierigkeiten wieder aufgenommen werden kann.

Der Greifer 23 entnimmt nun wiederum unmittelbar mittels der Greiferzange 24 einem der aus der Zentrifuge 2 herausgenommenen Proberöhrenkörbe 22 eine Proberöhre 6 und legt sie z. B. auf einem der Träger 5 der Fördereinrichtung 4 ab. Von da wird er dann zu dem Proberöhrenbehälter 7 verschoben, der gerade auf der Waage 17 steht und entnimmt demselben eine Proberöhre 6, die er dann in der bereits weiter oben beschriebenen Weise zu einem Proberöhrenkorb 22 bringt und dort ablegt. Dieser Vorgang wird so lange wiederholt, bis alle Proberöhren 6 in den Proberöhrenkörben 22 ausgetauscht sind. Zur gleichen Zeit werden die zuletzt in die Zentrifuge 2 eingeführten Proben zentrifugiert.

Das beschriebene Verfahren und die beschriebene Arbeitsstation können in vielen Einzelheiten abgewandelt werden, ohne dass der Bereich der Erfindung verlassen würde. Insbesondere kann die Ermittlung des Gewichts der Proberöhren auch zu anderen Zwecken erfolgen als im Hinblick auf die Verteilung derselben auf Proberöhrenkörbe zur Zentrifugierung. Die Zuführeinrichtung kann noch weitere Prüfungseinrichtungen aufweisen oder die beschriebenen können anders ausgebildet sein. So kann z. B. der Höhenabtaster eine andere Zahl von Zellen aufweisen und die Proberöhren bezüglich ihrer Höhe in eine andere Zahl von Klassen einteilen als im Ausführungsbeispiel angegeben. Die Uebergabeeinrichtung kann mehrere verschiedene Aufnahmevorrichtungen in mehreren Halterungen aufweisen, die zum Ankoppeln an Gegenstände verschiedener Kategorien geeignet sind. Die Arbeitsstation kann verschiedene Module zum Verteilen, Pipettieren und zur Durchführung anderer Verarbeitungsschritte aufweisen, die alle durch die Fördereinrichtung und die Uebergabeeinrichtung - es können auch mehrere sein - miteinander verbunden sind.

### Bezugszeichenliste

- 1: Zuführeinrichtung
- 2: Zentrifuge
- 3: Uebergabeeinrichtung
- 4: Fördereinrichtung
- 5: Träger
- 6: Proberöhre
- 7: Proberöhrenbehälter
- 8: Zuführbahn
- 9: Rückführbahn
- 10, 10': Zwischenbahnen
- 11: Grundplatte
- 12a,b: Förderbänder
- 13: Höhenabtaster
- 14: Balkencodeleser
- 15: Ausnehmung
- 16a,b: Laden
- 17: Waage
- 18: Plattform
- 19a,b: Ausnehmungen
- 20: Drehachse
- 21: Arme
- 22: Proberöhrenkorb
- 23: Greifer
- 24: Greiferzange
- 25a,b: Greiferfinger
- 26: Kontaktflächen
- 27: Aufnahmevorrichtung
- 28: Halterung
- 29: Handhabungsteil
- 30: Grundkörper
- 31: erster Kragen
- 32: zweiter Kragen
- 33a,b: Ausnehmungen
- 34: dritter Kragen
- 35a,b: Fortsätze
- 36: Anschlagfläche
- 37: Zwischenteil

- 38: Stiel
- 39: Trägerplatte
- 40a,b: U-Teile
- 41: Haken
- 42: Bodenplatte
- 43: Rückwand
- 44: Halteplatte
- 45: Schlitz
- 46: Auflagestreifen
- 47: Zentrierstreifen
- 48: Schlitz
- 49: Abschrägungen
- 50a,b: Frontplatten
- 51: Schlitz
- 52: Abschrägungen
- 53a,b: Kontaktbereiche
- 54: Laschen

## Patentansprüche

1. Verfahren zum Wägen von Proberöhren (6) und zum Beladen von Proberöhrekörben (22) einer Zentrifuge (2), wobei diese Proberöhren (6) Proben von unbekanntem Gewicht enthalten und In Proberöhrenbehältern (7), welche jeweils mindestens eine Proberöhre (6) enthalten, angeliefert werden, wobei diese Proberöhrekörbe (22) schliesslich Paare bilden, derart, dass die Gewichte der Proberöhrenkörbe (22) eines Paares jeweils um nicht mehr als einen bestimmten Maximalwert voneinander abweichen und anschliessend die Proberöhrenkörbe (22) derart in die Zentrifuge (2) eingeführt werden, dass die Proberöhrenkörbe (22) eines Paares einander bezüglich der Drehachse (20) der Zentrifuge (2) gegenüberliegen, **dadurch gekennzeichnet, dass** das Verfahren folgende Arbeltsschritte umfasst:
a) Bestimmen des individuellen Gewichts jeder dieser eine Probe enthaltenden Proberöhren (6);
b) Beladen der Proberöhrenkörbe (22) mit den Proberöhren (6) entsprechend einer angestrebten Gewichtsverteilung; und
c) Wiederholen der Schritte a) und b) bis die Proberöhrenkörbe (22) zumindest eines Paares wenigstens teilweise gefüllt sind, wobei die Gesamtgewichte der Proberöhrenkörbe (22) eines Paares jeweils um nicht mehr als den bestimmten Maximalwert voneinander abweichen.

2. Verfahren nach Anspruch 1, **dadurch gekennzeichnet, dass** der Schritt a) ausgeführt wird, indem
1) ein Proberöhrenbehälter (7) zusammen mit zumindest einer Proberöhre (6) auf einer Waage (17) angeordnet wird;
2) ein erstes Gesamtgewicht des Proberöhrenbehälters (7) zusammen mit der mindestens einen Proberöhre (6) mit der Waage (17) ermittelt wird;
3) eine Proberöhre (6) aus dem Proberöhrenbehälter (7) entnommen wird;
4) ein zweites Gesamtgewicht des Proberöhrenbehälters (7) ohne die entnommene Proberöhre (6) mit der Waage (17) ermittelt wird;
5) die Differenz dieser beiden Gesamtgewichte errechnet wird; und
6) diese Differenz als das individuelle Gewicht der entnommenen Proberöhre (6) zugeordnet wird.

3. Verfahren nach Anspruch 1 oder 2, **dadurch gekennzeichnet, dass** der Schritt b) ausgeführt wird, indem
1) eine Probenröhre (6) entsprechend Ihrem individuellen, in Schritt a) ermittelten Gewicht einer Individuellen Aufnahmeöffnung in einem Proberöhrenkorb (22) zugeordnet wird; und
2) diese Proberöhre (6) entsprechend ihrem individuellen Gewicht in diese zugeordnete individuelle Aufnahmeöffnung des Proberöhrenkorbes (22) eingesetzt wird.

4. Verfahren nach einem der Ansprüche 1 bis 3, **dadurch gekennzeichnet, dass** jeder Proberöhrenbehälter (7) zusammen mit zumindest einer Proberöhre (6) mittels einer Transportbahn befördert wird bis er sich über einer Plattform (18) der Waage (17) befindet, worauf diese Waage (17) angehoben wird, bis ihre Plattform (18) den Proberöhrenbehälter (7) zum Ermitteln dessen Gewichts der Transportbahn abhebt.

5. Verfahren nach einem der Ansprüche 1 bis 4, **dadurch gekennzeichnet, dass** das Gesamtgewicht der im Proberöhrenbehälter (7) verbleibenden Proberöhren (6) ausgehend von der letzten Wägung und dem bekannten Gewicht des Proberöhrenbehälters (7) bestimmt wird.

6. Verfahren nach einem der vorhergehenden Ansprüche, **dadurch gekennzeichnet, dass** vor der Entnahme der Proberöhre (6) aus dem Proberöhrenbehälter (7) ihre Höhen bestimmt werden.

7. Arbeitsstation zum Durchführen des Verfahrens nach einem der Ansprüche 1 bis 4, mit einer Übergabeeinrichtung (3) zur Entnahme von Proberöhren (6) aus Proberöhrenbehältern (7), von denen jeder eine Reihe von Proberöhren (6) enthält sowie mit einer Waage (17), **dadurch gekennzeichnet, dass** sie eine Zuführeinrichtung (1) umfasst mit mindestens einer Transportbahn zum Transport der Probenbehälter (7), wobei die Waage (17) zur Bestimmung des Gewichtes jeweils eines Proberöhrenbehälters (7) an einer Stelle der Transportbahn angeordnet ist und die Proberöhren (6) in dem jeweils auf der Waage (17) befindlichen Proberöhrenbehälter (7) mittels der Übergabeeinrichtung (3) entnehmbar sind.

8. Arbeitsstation nach Anspruch 7, **dadurch gekennzeichnet, dass** die Waage (17) eine Plattform (18) umfasst, welche zur Abhebung eines Proberöhrenbehälters (7) von der Transportbahn und Ermittlung seines Gewichtes anhebbar ist.

9. Arbeitsstation nach Anspruch 7 oder 8, **dadurch gekennzeichnet, dass** die Waage (17) einen Parallelogrammträger mit Dehnungsmessstreifen umfasst.

10. Arbeitsstation nach Anspruch 8 oder 9, **dadurch gekennzeichnet, dass** die Transportbahn mindestens ein Förderband (12a, 12b) umfasst, welches bei angehobener Plattform (18) durch eine Ausnehmung (19a, 19b) an der Oberseite derselben läuft.

11. Arbeitsstation nach einem der Ansprüche 7 bis 10, **dadurch gekennzeichnet, dass** sie mindestens drei Transportbahnen aufweist, nämlich eine Zuführbahn (8) und eine Rückführbahn (9), in welcher die Waage (17) angeordnet ist, zum Quertransport der Proberöhrenbehälter (7) und eine beide verbindende Zwischenbahn (10), über welche die Proberöhrenbehälter (7) einzeln längstransportiert werden und an welcher ein Höhenabtaster (13) zur Bestimmung der Höhen der Proberöhren (6) angeordnet ist.

12. Arbeitsstation nach Anspruch 11, **dadurch gekennzeichnet, dass** die Waage (17) im an die Zwischenbahn (10) anschliessenden Anfangsbereich der Rückführbahn (9) angeordnet ist.

13. Arbeitsstation nach Anspruch 11 oder 12, **dadurch gekennzeichnet, dass** an der Zwischenbahn (10) auch ein Balkencodeleser (14) zum Lesen von an den Proberöhren (6) angebrachten Balkencodes angeordnet ist.

14. Arbeitsstation nach einem der Ansprüche 7 bis 12, **dadurch gekennzeichnet, dass** sie eine Zentrifuge (2) umfasst sowie Proberöhrenkörbe (22) zur Aufnahme von Proberöhren (6) und zum Einsatz in der Zentrifuge (2).

15. Arbeitsstation nach einem der Ansprüche 7 bis 14, **dadurch gekennzeichnet, dass** die Übergabeeinrichtung (3) eine Greiferzange (24) zum Fassen von Proberöhren (6) umfasst.

16. Arbeitsstation nach den Ansprüchen 14 und 15, **dadurch gekennzeichnet, dass** die Übergabeeinrichtung (3) eine durch die Greiferzange (24) fassbare Aufnahmevorrichtung (27) aufweist zum Aufnehmen der Proberöhrenkörbe (22) und zum Einführen derselben in die Zentrifuge (2) und Entnehmen derselben aus der Zentrifuge (2).

17. Arbeitsstation nach Anspruch 16, **dadurch gekennzeichnet, dass** die Proberöhrenkörbe (22) jeweils mindestens eine Öse, insbesondere mehrere waagrecht voneinander beabstandete Ösen aufweisen und die Aufnahmevorrichtung (27) mit entsprechend angeordneten Haken (41) zum Eingriff in die mindestens eine Öse versehen ist.

## Claims

1. Procedure for weighing sample tubes (6) and for loading sample tube rotor blocks (22) of a centrifuge (2), in which these sample tubes (6) contain samples of unknown weight and are delivered in sample tube holders (7) each of which contains at least one sample tube (6), in which these sample tube rotor blocks (22) will finally constitute pairs such that the weights of the sample tube rotor blocks (22) of a pair do not differ by more than a prescribed maximum value, and the sample tube rotor blocks (22) are immediately afterwards introduced into the centrifuge (2) in such a way that the sample tube rotor blocks (22) of a pair are positioned on opposite sides of the axis of rotation (20) of the centrifuge (2), **characterized in that** the procedure comprises the following steps:
a) determination of the individual weight of each of these sample tubes (6) with its sample in it;
b) loading of the sample tube rotor blocks (22) with the sample tubes (6) in accordance with the desired weight distribution; and
c) repetition of steps (a) and (b) until the sample tube rotor blocks (22) of at least one pair are at least partially filled, the total weights of the sample tube rotor blocks (22) of any pair not differing from each other by more than the prescribed maximum weight.

2. Procedure according to Claim 1, **characterized in that** step (a) is carried out as follows:
1) a sample tube holder (7) together with at least one sample tube (6) is positioned on a balance (17);
2) a first total weight of a sample tube holder (7) together with the minimum of one sample tube (6) is ascertained by the balance (17);
3) a sample tube (6) is removed from the sample tube holder (7);
4) a second total weight of the sample tube holder (7) without the sample tube (6) that is been removed is ascertained by the balance (17);
5) the difference between the two total weights is calculated; and
6) this difference is assigned to the sample tube (6) that has been removed as its individual weight.

3. Procedure according to Claim 1 or 2, **characterized in that** step (b) is performed as follows:
1) a sample tube (6) is assigned to an individual reception opening in a sample tube rotor block (22) in accordance with its individual weight ascertained in step (a); and
2) this sample tube (6) is placed in the individual reception opening in a sample tube rotor block (22) assigned to it in accordance with its individual weight.

4. Procedure according to any one of Claims 1 to 3, **characterized in that** each sample tube holder (7) together with at least one sample tube (6) is transported by means of a transport track until it is in position over a platform (18) of a balance (17), whereupon this balance (17) is raised until its platform (18) lifts the sample tube holder (7) off the transport track in order to ascertain its weight.

5. Procedure according to any one of Claims 1 to 4, **characterized in that** the total weight of the sample tubes (6) remaining in the sample tube holder (7) is determined from the last weighing and the known weight of the sample tube holder (7).

6. Procedure according to any one of the above Claims, **characterized**
**in that** before the removal of the sample tubes (6) from the sample tube holder (7), their heights are determined.

7. Workstation for execution of the procedure according to any one of Claims 1 to 4 with a transfer device (3) to remove sample tubes (6) from sample tube holders (7), each of which contains a row of sample tubes (6), and with a balance (17), **characterized in that** it comprises a feed device (1) with at least one transport track to transport the sample tube holders (7), the balance (17) being arranged so as to ascertain the weight of each sample tube holder (7) at a point on the transport track and such that the sample tubes (6) in the sample tube holder (7) when positioned on the balance (17) can be removed by the transfer device (3).

8. Workstation according to Claim 7, **characterized in that** the balance (17) comprises a platform (18) which can be raised for the purpose of lifting a sample tube holder (7) off the transport track to ascertain its weight.

9. Workstation according to Claim 7 or 8, **characterized in that** the balance (17) comprises a parallelogram carrier with extensometer lines.

10. Workstation according to Claim 8 or 9, **characterized in that** the transport track comprises at least one conveyor belt (12a, 12b) which runs in a recess (19a, 19b) in the upper surface of the platform (18) when the latter is in raised position.

11. Workstation according to any one of Claims 7 to 10, **characterized in that** it has at least three transport tracks, an input track (8) and a return track (9), in which the balance (17) is located, for the lateral transport of the sample tube holders (7) and an intermediate track (10) linking the two by means of which the sample tube holders (7) are individually transported longitudinally and on which is arranged a height detector (13) to determine the height of the sample tubes (6).

12. Workstation according to Claim 11, **characterized in that** the balance (17) is arranged in the beginning part of the return track (9) next to the intermediate track (10).

13. Workstation according to Claim 11 or 12, **characterized in that** a bar code reader (14) is also located on the intermediate track (10) to read the bar codes applied to the sample tubes (6).

14. Workstation according to any one of Claims 7 to 12, **characterized in that** it comprises a centrifuge (2) as well as sample tube rotor blocks (22) to receive sample tubes (6) and to be used in the centrifuge (2).

15. Workstation according to any one of Claims 7 to 14, **characterized in that** the transfer device (3) comprises gripper tongs (24) to grasp sample tubes (6).

16. Workstation according to Claims 14 and 15, **characterized in that** the transfer device (3) comprises a pick-up device (27) that can be grasped by the gripper tongs (24) to pick up the sample tube rotor blocks (22), to introduce them into the centrifuge (2) and to remove them from the centrifuge (2).

17. Workstation according to Claim 16, **characterized in that** each of the sample tube rotor blocks (22) displays at least one eye, in particular a plurality of eyes spaced horizontally apart from each other, and the pick-up device (27) is provided with correspondingly arranged hooks (41) to engage with at least one eye.

## Revendications

1. Procédé de pesage de tubes à essais (6) et de chargement de paniers de tubes à essais (22) d'une centrifugeuse (2), dans lequel ces tubes à essais (6) contiennent des échantillons de masse inconnue et sont acheminés dans des récipients de tubes à essais (7) qui contiennent respectivement au moins un tube à essais (6), ces paniers de tubes à essais (22) formant finalement des paires de façon telle que les masses des paniers de tubes à essais (22) d'une paire ne dévient respectivement pas l'un de l'autre de plus d'une valeur maximale déterminée et de façon telle que les paniers de tubes à essais (22) sont ensuite introduits dans la centrifugeuse (2) de façon à ce que les paniers de tubes à essais (22) d'une paire s'opposent les uns aux autres par rapport à l'axe de rotation (20) de la centrifugeuse (2), **caractérisé en ce que** le procédé comprend les étapes de travail suivantes :
a) détermination de la masse individuelle de chacun de ces tubes à essais (6) contenant un échantillon;
b) chargement des paniers de tubes à essais (22) avec les tubes à essais (6) conformément à une répartition de masse recherchée; et
c) répétition des étapes a) et b) jusqu'à ce que les paniers de tubes à essais (22) d'au moins une paire soient au moins partiellement remplis, les masses totales des paniers de tubes à essais (22) d'une paire ne déviant pas les unes des autres de plus de la valeur maximale déterminée.

2. Procédé selon la revendication 1, **caractérisé en ce que** l'étape a) est exécutée **en ce que**
1) on dispose un récipient de tubes à essais (7) comportant au moins un tube à essais (6) sur une balance (17);
2) on détermine une première masse totale du récipient de tubes à essais (7) comportant au moins un tube à essais (6) avec la balance (17);
3) on retire un tube à essais (6) du récipient de tubes à essais (7);
4) on détermine avec la balance une seconde masse totale du récipient de tubes à essais (7) sans le tube à essais (6) retiré;
5) on calcule la différence des deux masses totales; et
6) on affecte cette différence en tant que masse individuelle du tube à essais (6) retiré.

3. Procédé selon la revendication 1 ou 2, **caractérisé en ce que** l'étape b) est réalisée **en ce que** :
1) on affecte un tube à essais (6), conformément à sa masse individuelle déterminée à l'étape a), à une ouverture de réception individuelle d'un panier de tubes à essais (22); et
2) on introduit ce tube à essais (6) conformément à sa masse individuelle dans cette ouverture de réception individuelle affectée du panier de tubes à essais (22).

4. Procédé selon l'une des revendications 1 à 3, **caractérisé en ce que** chaque récipient de tubes à essais (7) comportant au moins un tube à essais (6) est transporté au moyen d'une bande transporteuse jusqu'à ce qu'il se trouve sur une plate-forme (18) de la balance (17), suite à quoi cette balance (17) est relevée jusqu'à ce que sa plate-forme relève le récipient de tubes à essais (7) de la bande transporteuse pour déterminer sa masse.

5. Procédé selon l'une des revendications 1 à 4, **caractérisé en ce que** la masse totale des tubes à essais (6) restant dans le récipient de tubes à essais (7) est déterminée en partant de la dernière pesée et de la masse connue du récipient de tubes à essais (7).

6. Procédé selon l'une des revendications précédentes, **caractérisé en ce qu'**avant le prélèvement des tubes à essais (6) hors du récipient de tubes à essais (7), on détermine leur hauteur.

7. Station de travail permettant de réaliser le procédé selon l'une des revendications 1 à 4, comportant un dispositif de transfert (3) destiné à prélever des tubes à essais (6) de récipients de tubes à essais (7), parmi lesquels chacun contient une rangée de tubes à essais (6), ainsi qu'une balance (17), **caractérisée en ce qu'**elle comprend un dispositif d'alimentation (1) comportant au moins une bande transporteuse destinée au transport des récipients de tubes à essais (7), la balance (17), pour déterminer la masse de respectivement un récipient de tubes à essais (7), étant disposée en un emplacement de la bande transporteuse et les tubes à essais (6) pouvant être prélevés au moyen du dispositif de transfert (3) dans le récipient de tubes à essais (7) qui se trouve respectivement sur la balance (17).

8. Station de travail selon la revendication 7, **caractérisée en ce que** la balance (17) comprend une plate-forme (18) qui peut être soulevée pour relever un récipient de tubes à essais (7) de la bande transporteuse et déterminer sa masse.

9. Station de travail selon la revendication 7 ou 8, **caractérisée en ce que** la balance (17) comprend un support parallélogramme comportant des jauges d'allongement.

10. Station de travail selon la revendication 8 ou 9, **caractérisée en ce que** la bande transporteuse comporte au moins une bande transporteuse (12a, 12b) qui passe, lorsque la plate-forme (18) est soulevée, dans un évidement (19a, 19b) sur sa face supérieure.

11. Station de travail selon l'une des revendications 7 à 10, **caractérisée en ce qu'**elle présente au moins trois bandes transporteuses, à savoir une bande d'alimentation (8) et une bande de retour (9), dans laquelle la balance (17) est disposée, pour le transport transversal des récipients de tubes à essais (7), et une bande intermédiaire (10) reliant ces deux bandes, par laquelle les récipients de tubes à essais (7) sont transportés individuellement longitudinalement et sur laquelle est disposé un détecteur de hauteur (13) destiné à déterminer la hauteur des tubes à essais (6).

12. Station de travail selon la revendication 11, **caractérisée en ce que** la balance (17) est disposée dans la zone de départ de la bande de retour (9) qui se raccorde à la bande intermédiaire (10).

13. Station de travail selon la revendication 11 ou 12, **caractérisée en ce qu'**est aussi disposé au niveau de la bande intermédiaire (10) un lecteur de codes à barres (14) destiné à lire le code à barres appliqué sur les tubes à essais (6).

14. Station de travail selon l'une des revendications 7 à 12, **caractérisée en ce qu'**elle comprend une centrifugeuse (2) et des paniers de tubes à essais (22) destinés à recevoir des tubes à essais (6) et à l'utilisation dans la centrifugeuse (2).

15. Station de travail selon l'une des revendications 7 à 14, **caractérisée en ce que** le dispositif de transfert (3) comprend une pince de saisie (24) destinée à saisir les tubes à essais (6).

16. Station de travail selon les revendications 14 et 15, **caractérisée en ce que** le dispositif de transfert (3) présente un dispositif de réception (27) pouvant être pris par la pince de saisie (24), et destiné à prendre les paniers de tubes à essais (22) et à les introduire dans la centrifugeuse (2), puis à les retirer de la centrifugeuse (2).

17. Station de travail selon la revendication 16, **caractérisée en ce que** les paniers de tubes à essais (22) présentent respectivement au moins un oeillet, en particulier plusieurs oeillets écartés les uns des autres horizontalement et **en ce que** le dispositif de réception (27) est muni de crochets (41) disposés de façon correspondante pour s'insérer dans les oeillets, au moins au nombre de un.
